# EUROPEAN PATENT APPLICATION

(11) **EP 4 703 932 A1**
(43) Date of publication of application: **04.03.2026**
(21) Application number: 24197606.7
(22) Date of filing: 30.08.2024
(51) Int. Cl.: G06F 21/57, H04L 9/40

(54) **METHOD FOR COMMUNICATING WITH A DEVICE AND SERVER**

(71) Applicant: Siemens Aktiengesellschaft, 80333 München (DE)
(72) Inventor: Falk, Rainer, 85435 Erding (DE); Feist, Christian Peter, 80689 München (DE); Hornung, Peter, 91054 Erlangen (DE); Kumari, Ankita, 81549 München (DE); Mantel, Martin, 91325 Adelsdorf (DE); Piccoli, Alessandro, 80333 München (DE); Pyka, Stefan, 85570 Markt Schwaben (DE); Sperl, Franz, 92526 Oberviechtach (DE); Zeschg, Thomas, 81543 München (DE)
(74) Representative: Siemens Patent Attorneys

(57) **Abstract**

In the method for communicating with a device (ATT) an attestation (A) of the set of device-supported data providers (AS1, AS2) is requested from the device (ATT) and the attestation (A) of the set of device-supported data providers (AS1, AS2) is received and validated (AV), and depending on the set of device-supported data providers (AS1, AS2), the communication with the device (ATT) is conducted.

The Server (MS) is configured to carry out this method.

## Description

This invention relates to a method for communicating with a device and to a server enabling this method.

Industries are moving from closed devices to more open devices. This may mean allowing device operators or the customer to install applications (apps) from different app stores rather than restricting it to one single app store. On a device, multiple apps can be installed that have been loaded from different app stores. The app stores may apply security checks on apps with different thoroughness before making them available. In this scenario, a less trusted, malicious, or illegal app can also be present on the industrial device, thus, we need to remotely determine the trustworthiness of these apps before accepting a request or providing critical information.

The idea is to come up with an easy solution to determine the trustworthiness of a device depending on the apps being present on the industrial device and giving the operator the flexibility to have applications from different app stores or its own custom application on the device. A server might need to know if the applications that are installed respectively being executed on the device are not malicious and does not cause information leakage or the server might need to restrict access to some APIs while connecting to this application. With this approach, the industrial device is not restricted to which app store it can only install apps from. To achieve this and provide the trustworthiness of the device and the applications on the industrial device, remote attestation can be useful. It can be beneficial for an industrial app-enabled device that does not (and cannot) enforce strong isolation of each single app as it would be common on consumer devices (e.g., Android).

Thus, it is the aim of the present invention to provide an improved method for communicating with a device and to provide an improved server, configured to carry out such a method.

These aims of the current invention are solved by a method for communicating with a device comprising the features according ot claim 1 and by a server with the features according to claim 13. Preferred embodiments are contained in the respective dependent claims, the subsequent description and the attached drawing.

The method according to the invention is a method for communicating with a device. The method includes requesting an attestation of the set of device-supported data providers from the device, receiving and validating the attestation of the set of device-supported data providers, and conducting communication with the device depending on the set of device-supported data providers.

This method advantageously allows for secure and trustworthy communication with devices by assessing and verifying the providers of data, such as applications or engineering data, on the device. By attestation of the set of supported data providers, the method enables an additional or alternative approach to device security. The invention allows to assess device security based on the trustworthiness of the data providers, also as labelled data sources, rather than relying solely on the device itself.

This method according to the invention is particularly beneficial in industrial settings where devices may not enforce strong isolation between applications, as is common in consumer devices. The presence of a single malicious or compromised data in the form of an application can potentially jeopardize the security of the entire device and, by extension, the broader network the device is connected to. The method according to the invention addresses this problem by enabling the verification of the providers, also called sources within this application, of data such as installed applications, thus providing an additional layer of security particularly in app-enabled devices.

The method according to the invention may in an advantageous aspect further include dealing with a request from the device as part of the communication. In this particular aspect of the invention, first, a request of the device may be received. Subsequently, the security of the device is assessed by requesting the attestation of the set of device-supported data providers. Subsequently, the communication may preferably be continued or cancelled.

This feature improves the security when dealing with requests from devices. Using the method according to the invention, the security of the device is advantageously assessed beforehand and depending on the security of the device, the communication with the device may be continued.

The method according to the invention may advantageously involve responding to the device or not as part of conducting the communication with the device. In case the security of the device is deemed insufficient, the cancellation of any further communication such as not responding to the request of the device may be the safest way, e. g. for a server configured to handle device requests.

The data providers in the method according to the invention may preferably be app stores. By focusing on app stores as data providers, this advantageous aspect of the invention addresses the growing concern of application security in connected devices. It allows for verification of the sources or providers of installed applications, additionally increasing security in app-enabled devices.

Alternatively, and advantageously, the data providers may in an advantageous aspect of the method according to the invention be engineering stations and the data provided may be engineering data. In this aspect of the invention, the invention directly targets industrial and engineering use cases, where the integrity of engineering data is crucial and may enhance security in industrial control systems and similar environments.

The method according to the invention may in an advantageous aspect include comparing the set of data providers to a whitelist of data providers. This aspect advantageously provides a proactive approach to security by allowing only approved data providers. It enhances control over the device's data sources and helps prevent potential security risks from unauthorized providers.

Alternatively, and advantageously, the method may include comparing the set of data providers to a blacklist of data providers. In this aspect of the invention, security is addressed by explicitly identifying and blocking known malicious or untrusted data providers. It provides a reactive security measure and may be regarded complementary to the proactive whitelist approach.

The set of data providers may in an advantageous aspect of the invention be a set of app stores, which include app stores currently configured on the device and/or app stores currently and previously configured on the device.

The set of data providers may additionally or alternatively be a set of app stores from which the apps that are currently installed on the device have been loaded and/or a set of app stores from which the apps that are currently installed or that have been previously installed on the device have been loaded.

The set of data providers may additionally or alternatively be a set of app stores from which the apps that are currently executed on the device have been loaded.

The method may in an advantageous aspect of the invention be carried out on a component of the device. This aspect of the invention allows for local attestation and decision-making, potentially improving response times and reducing network dependencies. It enhances the device's autonomy in managing its own security.

Alternatively, the method according to the invention may be carried out remote from the device. Performing the method remotely allows for centralized management and decision-making, which can be advantageous for maintaining consistent security policies across multiple devices. It also allows for more powerful processing and analysis capabilities that might not be available on the device itself.

The server according to the invention is a server configured to carry out the method according to any of the previous aspects.

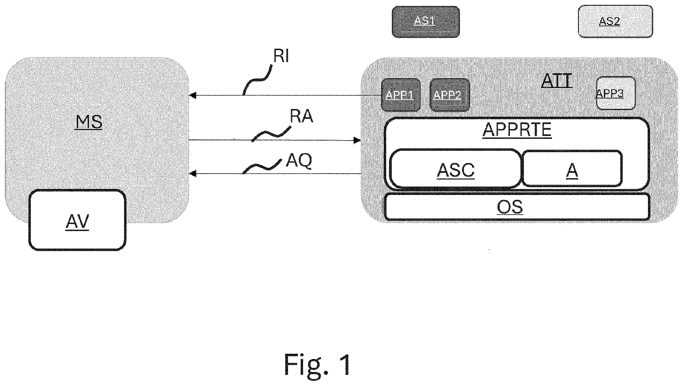

In the following, the invention is explained in more detail with the help of the attached drawing. The only Fig. 1 shows a communication of an industrial device ATT with a management server MS in a schematic drawing.

In the embodiment depicted in Fig. 1, the industrial device ATT is requesting information RI from the management server MS. The industrial device ATT hosts multiple apps APP1, APP2, APP3 on top of an operating system OS and has configured multiple app stores AS1, AS2. The management server MS determines the trustworthiness of the requesting industrial device ATT based on the attestation quote AQ that includes the information about the supported app stores AS1, AS2.

In Fig. 1, when the app APP1 requests information RI from the management server MS, the relying party, here the management server MS, needs to know if the industrial device ATT respectively the app runtime environment APPRTE of the industrial device ATT is trustworthy. For this, the management server MS requests RA the industrial device ATT for the app store attestation A that confirms the device-supported app stores AS1, AS2. On receiving the attestation request, the industrial device ATT will create an attestation quote AQ using the app store configuration ASC that includes the information about the app stores AS1 and AS2 configured and/or enabled on the industrial device ATT here. The industrial device ATT then signs the attestation quote AQ and sends it to the management server MS. Based on the app store whitelisting implemented on the management server MS, if only trustworthy app stores AS1, AS2 are configured on the industrial device ATT, the management server MS will accept the request from the requesting app APP1 and will send the requested information to this app APP1.

This idea can be extended to attest engineering data on a PLC, depending on the engineering station from which the engineering data has been loaded. Also, engineering data, e.g., PLC code, can be interpreted to be a form of a downloadable app. The different app stores in the figure can be replaced with the engineering stations that are sending some data to the PLC. And to check the trustworthiness of these stations, a similar approach can be used. The trustworthiness of these stations can be recorded either for logging or can be stored to validate the data later either on the device or local server.

The idea can also be extended to use further device parameters, boot measurements, etc. in the attestation quote, allowing the management servers to verify the state of the industrial device.

## Claims

1. Method for communicating with a device (ATT) in which an attestation (A) of the set of device-supported data providers (AS1, AS2) is requested from the device (ATT) and the attestation (A) of the set of device-supported data providers (AS1, AS2) is received and validated (AV), and in which depending on the set of device-supported data providers (AS1, AS2), the communication with the device (ATT) is conducted.

2. Method according to the previous claim, in which communicating means dealing with a request (RI) from the device (ATT).

3. Method according to one of the previous claims, in which conducting the communication with the device (ATT) means responding to the device (ATT) or not.

4. Method according to one of the previous claims, in which the data providers are app stores (AS1, AS2).

5. Method according to one of the previous claims, in which the data providers are engineering stations and the data that are provided by the data providers are engineering data.

6. Method according to one of the previous claims, in which the set of data providers (AS1, AS2) is compared to a whitelist of data providers.

7. Method according to one of the previous claims, in which the set of data providers (AS1, AS2) is compared to a blacklist of data providers.

8. Method according to one of the previous claims, in which the set of data providers is a set of app stores (AS1, AS2), and the set of app stores means a set of app stores currently configured on the device (ATT) and/or a set of app stores currently and previously configured on the device (ATT).

9. Method according to one of the previous claims, in which the set of data providers is a set of app stores (AS1, AS2) from which the apps (APP1, APP2, APP3) that are currently installed on the device (ATT) have been loaded and/or a set of app stores (AS1, AS2) from which the apps (APP1, APP2, APP3) that are currently installed or that have been previously installed on the device (ATT) have been loaded.

10. Method according to one of the previous claims, in which the set of data providers is a set of app stores (AS1, AS2) from which the apps (APP1, APP2, APP3) that are currently executed on the device (ATT) have been loaded.

11. Method according to one of the previous claims, which is carried out on a component of the device (ATT).

12. Method according to one of the previous claims, which is carried out remote from the device (ATT).

13. Server (MS), configured to carry out a method according to one of the previous claims.
